(19)

**Europäisches Patentamt**

**European Patent Office**

**Office européen des brevets**

(11) **EP 1 973 301 A2**

(12) **EUROPEAN PATENT APPLICATION**

(43) Date of publication:
**24.09.2008 Bulletin 2008/39**

(51) Int Cl.:
***H04L 29/08*** (2006.01)

(21) Application number: **08102807.8**

(22) Date of filing: **20.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.03.2007 JP 2007073226**

(71) Applicant: **NEC CORPORATION**
**Tokyo (JP)**

(72) Inventors:
- **Cambria, Jocelyn**
  **Tokyo (JP)**
- **Hashiguchi, Atsushi**
  **Tokyo (JP)**

(74) Representative: **Betten & Resch**
**Patentanwälte**
**Theatinerstrasse 8**
**80333 München (DE)**

(54) **Presence service system**

(57)    A presence service system (100) includes at least two presence servers (41, 42, 43), at least two presence databases (51, 52, 53) storing therein presence information of users, each of the presence databases (51, 52, 53) being associated with any one of the presence servers (41, 42, 43), and an assignment presence server (20) which, when a request relating to presence service is transmitted to the presence service system (100) from a user terminal (71, 72), carries out an assignment process in which the request is transmitted to one of the presence servers (41, 42, 43) covering a user designated in the request.

FIG.3

**Description**

BACKGROUND OF THE INVENTION

FIELD OF THE INVENTION

The invention relates to a presence service system, a network system including the presence service system, an assignment presence server, a method of assigning a request relating to presence service, and a program for causing a computer to carry out the method.

DESCRIPTION OF THE RELATED ART

There is known a presence service system which administrates current information (presence information) relating to a user and his/her communication terminal which is able to make communication with others through a network.

Such a presence service system generally includes a database server storing therein subscriber information, and presence information of each of subscribers.

If a presence service system is in a large scale, since one presence server cannot cover all of subscribers, it would be necessary for a presence service system to include a plurality of presence servers, and a plurality of database servers each associated with each of the presence servers.

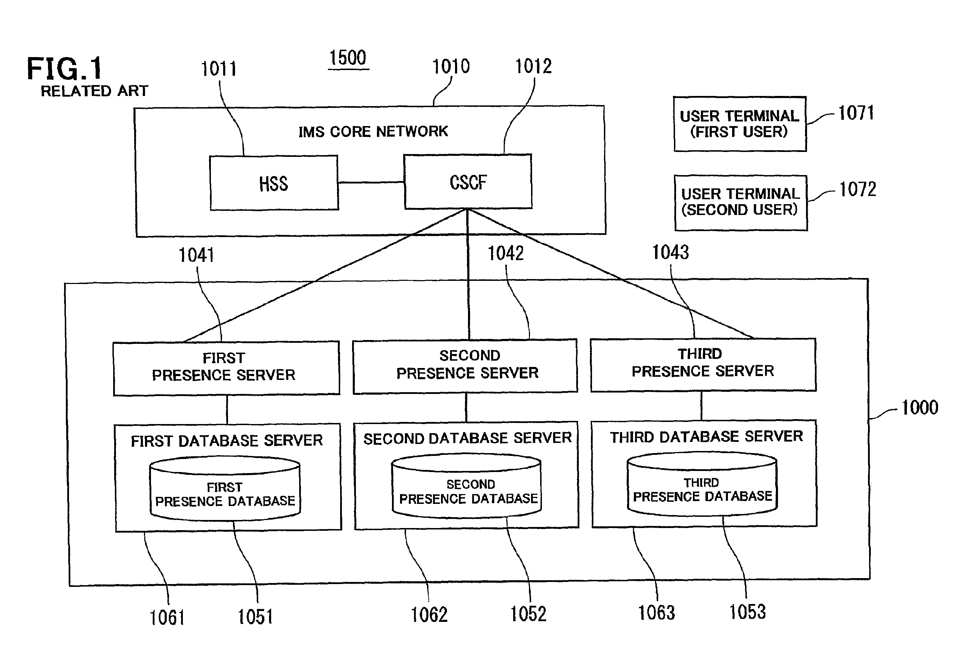

FIG. 1 is a block diagram of a related network system 1500 including a presence service system 1000 including a plurality of database servers.

As illustrated in FIG. 1, the related network system 1500 is comprised of an IMS (IP Multimedia Subsystems) core network 1010, and a presence service system 1000.

The presence service system 1000 includes first to third presence servers 1041, 1042 and 1043, and first to third database servers 1061, 1062 and 1063 each associated with the first to third presence servers 1041, 1042 and 1043, respectively.

The first to third database servers 1061, 1062 and 1063 include first to third presence databases 1051, 1052 and 1053, respectively.

Herein, the presence service system 1000 may include any number of presence databases or database servers. The presence service system 1000 illustrated in FIG. 1 is exemplified as including three presence databases or database servers. Similarly, the presence service system 1000 may include any number of presence servers. The presence service system 1000 illustrated in FIG. 1 is exemplified as including three presence servers in conformity with a number of the presence databases.

The IMS core network 1010 includes a HSS (Home Subscriber Server) 1011, and a CSCF (Call Session Control Function) 1012.

The HSS 1011 defines a subscriber database server at a core network side, and stores subscriber ID data, authentication data, data relating to IFC (Initial Filter Criteria), and other various subscriber data.

The HSS 1011 stores data indicative of which presence server stores data about each of subscribers (users).

Herein, assuming that the first presence server 1041 carries out a step relating to presence information of a certain user, the first presence server 1041 is called "a presence server covering the user" in the specification. A presence database associated with a presence server covering a certain user stores presence information and subscriber information of the certain user.

In the related network system 1500, presence server addresses stored in the HSS 1011 are addresses of the first to third presence servers 1041, 1042 and 1043.

The CSCF 1012 works as a window of communication made in the IMS core network 1010.

User terminals 1071 and 1072 illustrated in FIG. 1 are communication terminal devices capable of making communication with others through a network. For instance, the user terminals 1071 and 1072 are comprised of a PC (Personal Computer), a mobile phone, a PHS (Personal Handy-phone System) or other communication terminal devices.

Though there is a remarkable number of the user terminals 1071 and 1072 (for instance, one million or ten million and so on), FIG. 1 illustrates only two user terminals for simplification.

Each of the user terminals 1071 and 1072 is designed to be able to transmit a request relating to presence service (specifically, a signal indicative of such a request) to the CSCF 1012 in the IMS core network 1010.

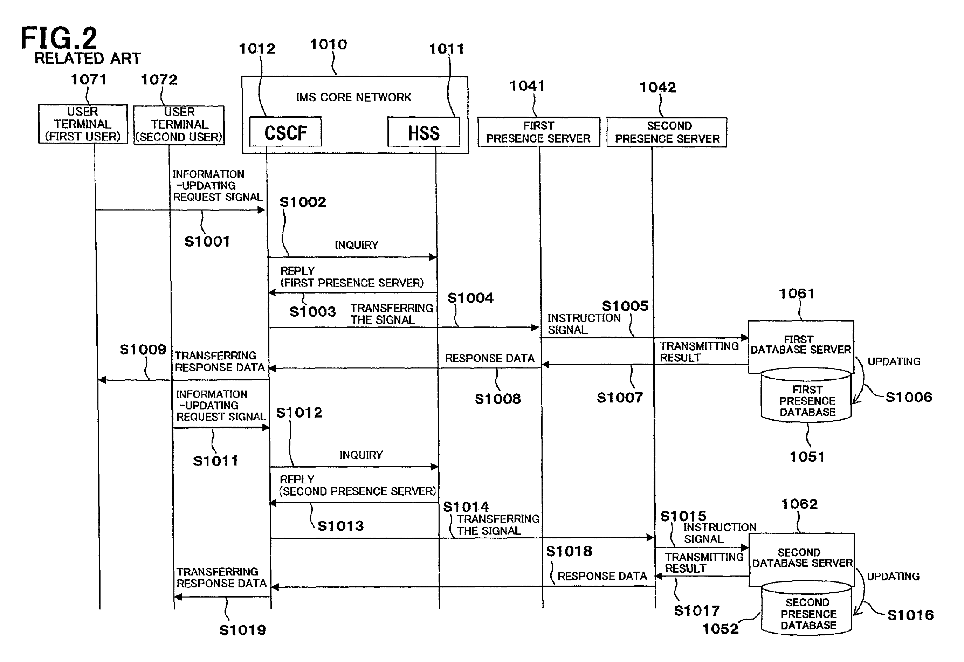

Hereinbelow is explained an operation of the presence service system 1000 with reference to FIG. 2.

It is assumed that a first user of the user terminal 1071 is covered by the first presence server 1041, and a second user of the user terminal 1072 is covered by the second presence server 1042, in other words, subscriber information and presence information of the first user are stored in the first presence database 1051, and subscriber information and presence information of the second user are stored in the second presence database 1052.

FIG. 2 shows steps for the first and second users to request updating their presence information through their user terminals 1071 and 1072.

First, when presence information of the first user of the user terminal 1071 changes, the user terminal 1071 transmits an information-updating request signal to the CSCF 1012 of the IMS core network 1010 through Internet or other network, in step S1001.

Herein, an information-updating request signal indicates a signal by which a user requests that his/her presence information is updated, when his/her presence information changes. Specifically, the information-updating request signal includes identification data to be used for identifying a user, and data indicative of how his/her presence information changed.

On receipt of the information-updating request signal from the user terminal 1071, the CSCF 1012 makes an inquiry to the HSS 1011 about which presence server covers a user designated by the request, that is, the first user, in step S1002.

On receipt of the inquiry from the CSCF 1012, the HSS 1011 retrieves a database equipped in the HSS 1011 to find a presence server which covers the first user.

As a result of the retrieval, since the HSS 1011 gets to know that the first user is covered by the first presence server 1041, the HSS 1011 informs the CSCF 1012 that the first user is covered by the first presence server 1041, in step S1003.

On receipt of a response from the HSS 1011, the CSCF 1012 transfers the information-updating request signal to the first presence server 1041, in step S1004.

On receipt of the information-updating request signal from the CSCF 1012, the first presence server 1041 transmits an instruction signal indicating that presence information of the first user should be updated in accordance with what is indicated by the information-updating request signal, to a database server associated with the first presence server 1041, that is, the first database server 1061, in step S1005.

On receipt of the instruction signal, the first database server 1061 carries out a step in accordance with the received instruction signal, in step S1006. For instance, the first database server 1061 carries out a step of updating presence information of the first user.

Then, the first database server 1061 transmits a result of the step having been carried out in accordance with the instruction signal, to a presence server associated with the first database server 1061, that is, the first presence server 1041, in step S1007.

On receipt of the result of the step from the first database server 1061, the first presence server 1041 produces response data in conformity with the request, and transmits the thus produced response data to the CSCF 1012, in step S1008.

On receipt of the response data from the first presence server 1041, the CSCF 1012 transfers the received response data to the user terminal 1071, in step S1009.

Thus, the response data indicative of how the request relating to presence service was dealt with is transmitted back to the first user who transmitted the request, in a route opposite to a route in which the request was transferred.

In the above-mentioned manner, the first user of the user terminal 1071 receives the response data, and can know that his/her presence information was correctly updated in accordance with the information-updating request signal transmitted by himself/herself.

An operation to be carried out when an information-updating request signal is transmitted from the second user of the user terminal 1072, specifically the steps S1011 to S1019 illustrated in FIG. 2, is identical with the operation to be carried out when an information-updating request signal is transmitted from the first user of the user terminal 1071, specifically the steps S1001 to S1009 illustrated in FIG. 2.

As a result of making an inquiry in steps S1012 and S1013, the CSCF 1012 gets to know that an information-updating request signal should be transferred to the second presence server 1042, the CSCF 1012 transfers the information-updating request signal to the second presence server 1042, in step S1014.

The second presence server 1042 transmits an instruction signal indicating that presence information of the second user should be updated in accordance with what is indicated by the information-updating request signal, to a database server associated with the second presence server 1042, that is, the second database server 1062, in step S1015.

On receipt of the instruction signal, the second database server 1062 updates the presence information of the second user, in step S1016.

For instance, Japanese Patent Application Publication No. 2005-318503 has suggested an example of a presence service system.

In the presence service system 1000 illustrated in FIG. 1, on receipt of the above-mentioned request from a user terminal, it is necessary for the CSCF 1012 to make an inquiry to the HSS 1011 about which presence server covers a user designated in the request.

Furthermore, it is also necessary for the HSS 1011 to include a database indicating which presence server covers each of users, in order to respond to the inquiry.

Accordingly, IFC in the HSS 1011 has to be changed each time a number of the database servers is increased or decreased.

As a result, each time presence service is expanded or contracted, impact is exerted on the IMS core network 1010. In other words, maintenance has to be carried out for the IMS core network 1010.

## SUMMARY OF THE INVENTION

In view of the above-mentioned problems in the related presence service system, it is an exemplary object of the present invention to provide a presence service system which does not exert impact on a core network even if a number of a database servers were increased or decreased.

It is further an exemplary object of the present invention to provide a network system including the above-mentioned presence service system, an assignment presence server to be used in the above-mentioned presence service system, a method of assigning a request relating to presence service, and a program for causing a computer to carry out the method.

In a first exemplary aspect of the present invention, there is provided a presence service system including at least two presence servers, and at least two presence databases storing therein presence information of users, each of the presence databases being associated with any one of the presence servers, characterized by an assignment presence server which, when a request relating to presence service is transmitted to the presence service system from a user terminal, carries out an assignment process in which the request is transmitted to one of the presence servers covering a user designated in the request.

In a second exemplary aspect of the present invention, there is provided a network system including a core network, and the above-mentioned presence service system, wherein the core network, on receipt of the request from the user terminal, transfers the request to the presence service system without confirming which presence server covers a user designated in the request.

In a third exemplary aspect of the present invention, there is provided an assignment presence server used in a presence service system including at least two presence servers, at least two presence databases storing therein presence information of users, each of the presence databases being associated with any one of the presence servers, wherein when a request relating to presence service is transmitted to the presence service system from a user terminal, the assignment presence server carries out an assignment process in which the request is transmitted to one of the presence servers covering a user designated in the request.

In a fourth exemplary aspect of the present invention, there is provided a method of assigning a request relating to presence service transmitted from a user terminal to a presence service system including at least two presence servers, and at least two presence databases storing therein presence information of users, each of the presence databases being associated with any one of the presence servers, the method including detecting which presence server covers a user designated in the request, and transferring the request to the detected presence server.

In a fifth exemplary aspect of the present invention, there is provided a recording medium readable by a computer, storing a program therein for causing a computer to carry out a method of assigning a request relating to presence service transmitted from a user terminal to a presence service system including at least two presence servers, and at least two presence databases storing therein presence information of users, each of the presence databases being associated with any one of the presence servers, the method including detecting which presence server covers a user designated in the request, and transferring the request to the detected presence server.

The above and other objects and advantageous features of the present invention will be made apparent from the following description made with reference to the accompanying drawings, in which like reference characters designate the same or similar parts throughout the drawings.

BRIEF DESCRIPTION OF THE DRAWINGS

FIG. 1 is a block diagram illustrating a structure of a related presence service system.
FIG. 2 illustrates steps to be carried out in the related presence service system illustrated in FIG. 1, when presence information of a user is to be updated.
FIG. 3 is a block diagram illustrating a structure of a network system in accordance with the first exemplary embodiment, including a presence service system.
FIG. 4 illustrates steps to be carried out in the presence service system illustrated in FIG. 1, when presence information of a user is to be updated.
FIG. 5 illustrates an operation of an assignment presence server.
FIG. 6 illustrates an example of a storage-ratio table.
FIG. 7 is a flow-chart showing steps to be carried out by an assignment presence server in a test for determining a rearrangement process is to be carried out or not.
FIG. 8 is a block diagram illustrating a structure of a first variant of the network system illustrated in FIG. 3.
FIG. 9 is a block diagram illustrating a structure of a second variant of the network system illustrated in FIG. 3.
FIG. 10 is a flow-chart showing steps to be carried out by an assignment presence server in an alarming process in the second exemplary embodiment.
FIG. 11 is a block diagram illustrating a structure of a network system in accordance with the third exemplary embodiment, including a presence service system.

DESCRIPTION OF THE EXEMPLARY EMBODIMENTS

Exemplary embodiments in accordance with the present invention will be explained hereinbelow with reference to drawings.

[First Exemplary Embodiment]

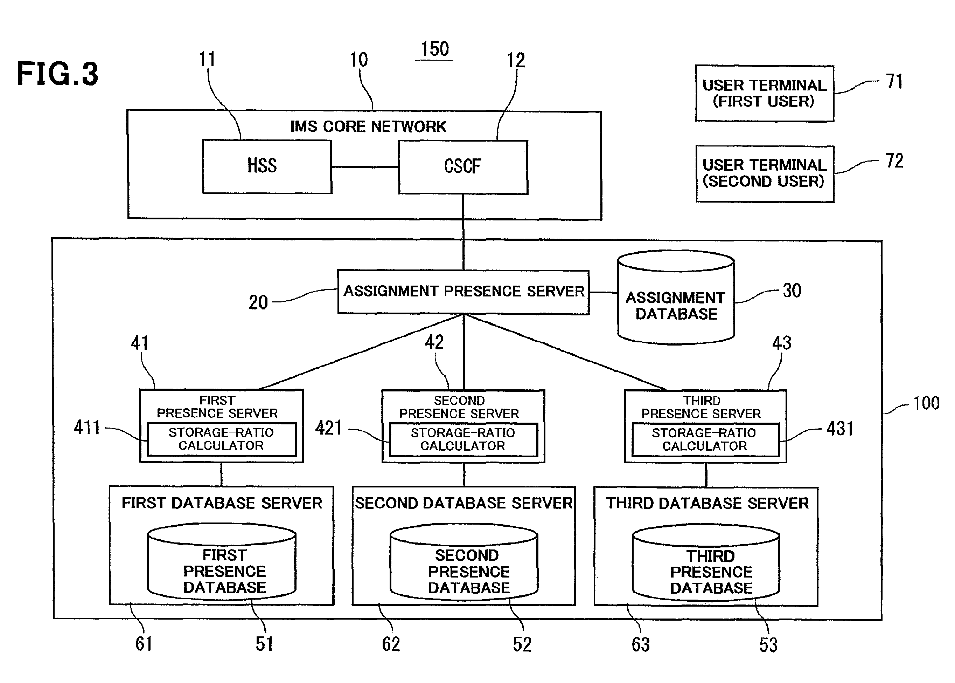

FIG. 3 is a block diagram illustrating a structure of a network system 150 in accordance with the first exemplary embodiment of the present invention.
As illustrated in FIG. 3, the network system 150 is comprised of an IMS (IP Multimedia Subsystems) core network 10, and a presence service system 100.
The IMS core network 10 includes a HSS (Home Subscriber Server) 11, and a CSCF (Call Session Control Function) 12.
The HSS 11 defines a subscriber database server at a core network side, and includes a database which stores subscriber ID data, authentication data, data relating to IFC (Initial Filter Criteria), and other various subscriber data.

In the first exemplary embodiment, an IFC presence server address stored in the HSS 11 is just an IP address of a later-mentioned assignment presence server 20.

The CSCF 1012 works as a window of communication made in the IMS core network 10.

The presence service system 10 includes an assignment presence server 20 which carries out an assignment process in which a request signal (signal indicative of a request relating to presence service) transmitted from user terminals 71 and 72 through the IMS core network 10 is assigned to one of later-mentioned first to third presence servers 41, 42 and 43, an assignment database 30 which the assignment presence server 20 retrieves when the assignment process is carried out, first to third presence servers 41, 42 and 43, and first to third database servers 61, 62 and 63 each associated with the first to third presence servers 41, 42 and 43, respectively.

The first to third database servers 61, 62 and 63 include first to third presence databases 51, 52 and 53, respectively.

Herein, the presence service system 100 may include any number of presence databases or database servers. The presence service system 100 illustrated in FIG. 3 is exemplified as including three presence databases or database servers. Similarly, the presence service system 100 may include any number of presence servers. The presence service system 100 illustrated in FIG. 3 is exemplified as including three presence servers in conformity with a number of the presence databases.

User terminals 71 and 72 illustrated in FIG. 3 are communication terminal devices capable of making communication with others through a network. For instance, each of the user terminals 71 and 72 is comprised of a PC (Personal Computer), a mobile phone, a PHS (Personal Handy-phone System) or other communication terminal devices.

Though there is a remarkable number of the user terminals 71 and 72 (for instance, one million or ten million and so on), FIG. 3 illustrates only two user terminals for simplification.

Each of the user terminals 71 and 72 is designed to be able to transmit a request signal including a request relating to presence service to the CSCF 12 in the IMS core network 10. For instance, the request signal is comprised of a signal which, when presence information of a user and/or his/her user terminal changes, requests to update the presence information, or a signal which requests to transmit presence information of other users and/or their user terminals thereto.

When the first or second user would like to have presence service, he or she transmits a request signal to the CSCF 12 equipped in the IMS core network 10 through his/her user terminals 71 and 72 via Internet or other networks.

A request signal includes data for identifying the user terminals 71 and 72 through which a request signal is transmitted, data for identifying the first and second users of the user terminals 71 and 72, data indicative of what is requested by a request signal, and data for identifying a user designated in a request, for instance.

Each of data for identifying the first and second users and data for identifying a user designated in a request is comprised of a telephone number or SIP-URI (Uniform Resource Identifier), for instance.

Data indicative of what is requested by a request signal is comprised of the following data (A), (B) or (C), for instance.

(A) data indicating that, in the case that each of the user terminals 71 and 72 is a mobile phone, the user terminals 71 and 72 cannot respond to a call because they are making communication with another phone, in which case, data for identifying a user designated in a request is identical to data for identifying the first and second users of the user terminals 71 and 72.

(B) data indicating that the first and second users of the user terminals 71 and 72 request to transmit thereto presence information of other user terminals or other users, in which case, data for identifying a user designated in a request is comprised of data for identifying users of other user terminals.

(C) data indicating that the first and second users put the user terminals 71 and 72 into a condition that a request of transmitting presence information of the user terminals 71 and 72 to other user terminals is refused, that is, presence information of the user terminals 71 and 72 is prohibited to be shown to other users, in which case, data for identifying a user designated in a request is identical to data for identifying the first and second users of the user terminals 71 and 72.

The request signal is comprised of a SIP (Session Initiation Protocol) signal or an XCAP (extensible markup language Configuration Access Protocol) signal.

An SIP signal is used to establish session between user terminals to make communication with each other, and an XCAP signal is used to retrieve and update a network address directory.

The CSCF 12 of the IMS core network 10 transmits the request signal received from the user terminals 71 and 72, to the assignment presence server 20 of the presence service system 100 through Internet or other networks.

In the above-mentioned related presence service system, the CSCF 12 makes an inquiry to the HSS 11 about which presence server covers a user designated in the request signal. In contrast, the CSCF 12 in the first exemplary embodiment does not make such an inquiry to the HSS 11, but transmits the request signal received from the user terminals 71 and 72, to the assignment presence server 20.

On receipt of the request signal from the CSCF 12 of the IMS core network 10, the assignment presence server 20 carries out an assignment process as follows.

First, the assignment presence server 20 retrieves the assignment database 30 to select one of the first to third presence servers 41, 42 and 43 to which the request signal received from the CSCF 12 of the IMS core network 10 should be transferred.

The assignment database 30 stores therein a later-mentioned assignment table indicating which presence server among the first to third presence servers 41, 42 and 43 covers each of users. Accordingly, it is possible to select one of the first to third presence servers 41, 42 and 43 to which the request signal should be transmitted, by retrieving the assignment table.

Furthermore, the assignment presence server 20 transmits the request signal to the thus selected presence server among the first to third presence servers 41, 42 and 43 through Internet or other networks. In other words, the assignment presence server 20 transmits the request signal to one of the first to third presence servers 41, 42 and 43 which covers a user designated in the request signal as a target.

Each of the first to third presence servers 41, 42 and 43 is associated one to one with each of the first to third database servers 61, 62 and 63. Specifically, the first presence server 41 is associated with the first database server 61, the second presence server 42 is associated with the second database server 62, and the third presence server 43 is associated with the third database server 63.

Herein, assuming that the first presence server 41 carries out a step relating to presence information of a certain user (for instance, a step of updating presence information), the first presence server 41 is called "a presence server covering the user" in the specification. A presence database associated with a presence server covering a certain user stores presence information and subscriber information of the certain user.

Specifically, for instance, if the first presence server 41 carries out a step relating to presence information of the first user of the user terminal 71, it is said that "the first user is covered by the first presence server 41", in which case, presence information and subscriber information of the first user is stored in the first presence database 51 associated with the first presence server 41.

On receipt of the request signal from the assignment presence server 20, each of the first to third presence servers 41, 42 and 43 transmits an instruction which is in conformity with the received request signal, to the associated database server (specifically, the first to third database servers 61, 62 and 63, respectively) through Internet and other networks.

An instruction transmitted from each of the first to third presence servers 41, 42 and 43 to each of the first to third database servers 61, 62 and 63, respectively, may be an instruction to update presence information or an instruction to transmit presence information of other users thereto, for example.

On receipt of the instruction from the associated presence server among the first to third presence servers 41, 42 and 43, each of the first to third database servers 61, 62 and 63 carries out a task in accordance with the received instruction, and transmits the result of the task to the associated presence server.

The user terminals 71 and 72, the CSCF 12, the assignment presence server 20, the first to third presence servers 41, 42 and 43, and the first to third database servers 61, 62 and 63 have an IP address assigned thereto, and can make communication with one another through the use of the IP address.

The user terminals 71 and 72, the CSCF 12, the assignment presence server 20, the first to third presence servers 41, 42 and 43, and the first to third database servers 61, 62 and 63 are comprised of a central processing unit (CPU), a memory such as a read only memory (ROM) storing therein a program for operating the central processing unit, and a memory such as random access memory (RAM) presenting an area in which the central processing unit works. The central processing unit equipped in each of the user terminals 71 and 72, the CSCF 12, the assignment presence server 20, the first to third presence servers 41, 42 and 43, and the first to third database servers 61, 62 and 63 executes the program to thereby accomplish later-mentioned steps.

Hereinbelow is explained an operation of the network system 150 in accordance with the first exemplary embodiment.

As an example, a process for updating presence information of the first and second users of the user terminals 71 and 72 is explained.

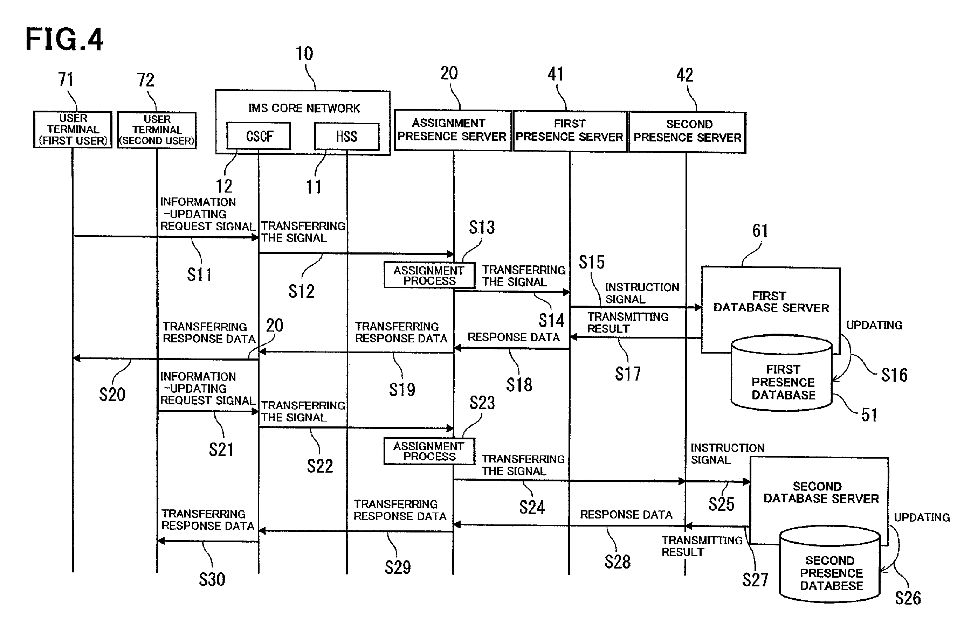

FIG. 4 shows steps for the first and second users to request updating their presence information through their user terminals 71 and 72.

It is assumed that the first user of the user terminal 71 is covered by the first presence server 41, and the second user of the user terminal 72 is covered by the second presence server 42, in other words, subscriber information and presence information of the first user are stored in the first presence database 51, and subscriber information and presence information of the second user are stored in the second presence database 52.

For instance, when presence information of the first user of the user terminal 71 changes, the user terminal 71 transmits an information-updating request signal to the CSCF 12 of the IMS core network 10 through Internet or other network, in step S11.

Herein, an information-updating request signal indicates a signal by which a user requests that his/her presence information is updated, when his/her presence information changes. Specifically, the information-updating request signal includes data for identifying the user terminal 71 through which an information-updating request signal is transmitted, data for identifying the first user of the user terminal 71, data indicative of what is requested by an information-updating request signal, and data for identifying a user designated in a request, for instance.

Since an information-updating request signal for requesting to update presence information of the first user or the user terminal 71 is transmitted from the user terminal 71, data for identifying the first user of the user terminal 71 is identical with data for identifying a user designated in a request, both of which are used to identify the first user.

On receipt of the information-updating request signal from the user terminal 71, the CSCF 12 transfers the received information-updating request signal to the assignment presence server 20, in step 512.

On receipt of the information-updating request signal from the CSCF 12, the assignment presence server 20 carries out an assignment process as follows, in step S 13.

First, the assignment presence server 20 selects one of the first to third presence servers 41, 42 and 43 to which the information-updating request signal should be transferred.

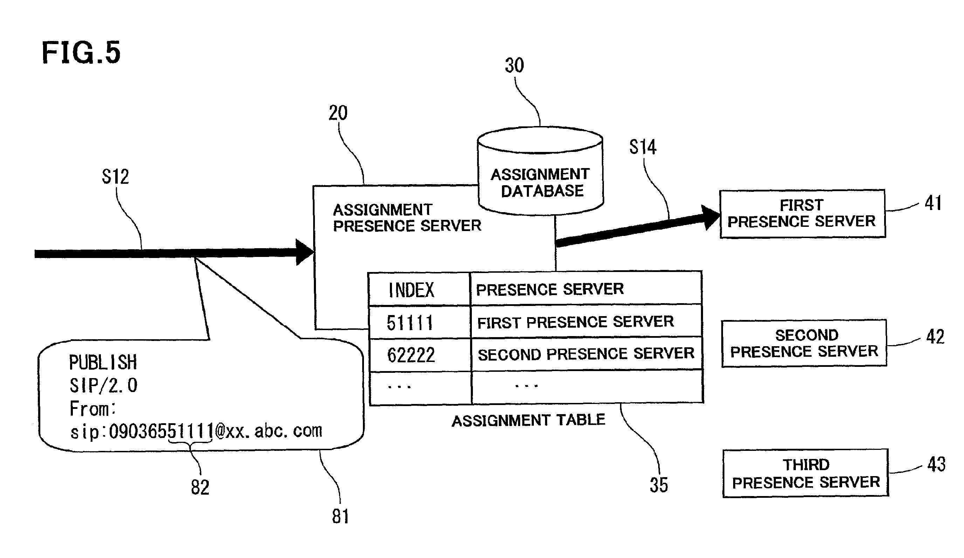

FIG. 5 illustrates steps in the assignment process carried out by the assignment presence server 20 to determine a presence server to which the information-updating request signal should be transferred.

As illustrated in FIG. 5, on receipt of an information-updating request signal comprised of an SIP signal 81, for instance, the assignment presence server 20 retrieves an assignment table 35 included in the assignment database 30 through the use, as an index, of a predetermined number of columns 82 (for instance, five columns "51111" illustrated in FIG. 5) of SIP-URI (Uniform Resource Identifier) included in the SIP signal 81 as data for identifying a user designated in a request.

As illustrated in FIG. 5, the assignment table 35 indicates correspondence between each of indexes comprised of the above-mentioned columns 82 and a presence server (specifically, a presence server covering users designated by a particular index) associated with each of indexes.

For instance, users transmitting the SIP signal 81 including the columns "51111" are all covered by the first presence server 41, and users transmitting the SIP signal 81 including the columns "62222" are covered by the second presence server 42, as illustrated in FIG. 5.

Accordingly, if the assignment presence server 20 receives the information-updating request signal comprised of the SIP signal 81 including the columns "51111", the assignment presence server 20 judges that a presence server to which the information-updating request signal should be transferred is the first presence server 41, by retrieving the assignment table 35 included in the assignment database 30.

In accordance with the judgment, the assignment presence server 20 transfers the information-updating request signal to the first presence server 41, in step S14.

On receipt of the information-updating request signal from the assignment presence server 20, the first presence server 41 transmits an instruction signal indicating that presence information of the first user should be updated in accordance with what is indicated by the information-updating request signal, to a database server associated with the first presence server 41, that is, the first database server 61, in step S15. For instance, such an instruction signal includes an instruction that presence information indicating that the user terminal 71 is not making communication should be updated to presence information indicating that the user terminal 71 is presently making communication.

On receipt of the instruction signal, the first database server 61 carries out a step in accordance with the received instruction signal, in step S16. For instance, the first database server 61 carries out a step of updating presence information of the first user.

Then, the first database server 61 transmits a result of the step having been carried out in accordance with the instruction signal, to a presence server associated with the first database server 61, that is, the first presence server 41, in step S17.

On receipt of the result of the step from the first database server 61, the first presence server 41 produces response data in conformity with the request, and transmits the thus produced response data to the assignment presence server 20, in step S18.

On receipt of the response data from the first presence server 41, the assignment presence server 20 transfers the received response data to the CSCF 12 of the IMS core network 10, in step S19.

On receipt of the response data from the assignment presence server 20, the CSCF 12 of the IMS core network 10 transmits the received response data to the user terminal 71, in step S20.

Thus, the response data indicative of how the request relating to presence service was dealt with is transmitted back to the first user who transmitted the request, in a route opposite to a route in which the request was transferred.

In the above-mentioned manner, the first user of the user terminal 71 receives the response data, and can know that his/her presence information was correctly updated in accordance with the information-updating request signal transmitted by himself/herself.

An operation to be carried out when an information-updating request signal is transmitted from the second user of the user terminal 72 is identical with the operation to be carried out when an information-updating request signal is transmitted from the first user of the user terminal 71.

As mentioned above, it is assumed the second user of the user terminal 72 is covered by the second presence server 42.

For instance, when presence information of the second user of the user terminal 72 changes, the user terminal 72 transmits an information-updating request signal to the CSCF 12 of the IMS core network 10 through Internet or other network, in step S21.

On receipt of the information-updating request signal from the user terminal 72, the CSCF 12 transfers the received information-updating request signal to the assignment presence server 20, in step S22.

On receipt of the information-updating request signal from the CSCF 12, the assignment presence server 20 carries out the above-mentioned assignment process as follows, in step S23.

As a result of carrying out the assignment process, the assignment presence server 20 transfers the information-updating request signal to the second presence server 42, in step S24.

On receipt of the information-updating request signal from the assignment presence server 20, the second presence server 42 transmits an instruction signal indicating that presence information of the second user should be updated in accordance with what is indicated by the information-updating request signal, to a database server associated with the second presence server 42, that is, the second database server 62, in step S25.

On receipt of the instruction signal, the second database server 62 carries out a step in accordance with the received instruction signal, in step S26. For instance, the second database server 62 updates presence information of the second user.

Then, the second database server 62 transmits a result of the step having been carried out in accordance with the instruction signal, to a presence server associated with the second database server 62, that is, the second presence server 42, in step S27.

On receipt of the result of the step from the second database server 62, the second presence server 42 produces response data in conformity with the request, and transmits the thus produced response data to the assignment presence server 20, in step S28.

On receipt of the response data from the second presence server 42, the assignment presence server 20 transfers the received response data to the CSCF 12 of the IMS core network 10, in step S29.

On receipt of the response data from the assignment presence server 20, the CSCF 12 of the IMS core network 10 transmits the received response data to the user terminal 72, in step S30.

Thus, the response data indicative of how the request relating to presence service was dealt with is transmitted back to the second user who transmitted the request, in a route opposite to a route in which the request was transferred.

In the above-mentioned manner, the first user of the second terminal 72 receives the response data, and can know that his/her presence information was correctly updated in accordance with the information-updating request signal transmitted by himself/herself.

Hereinbelow is explained a process of calculating a storage ratio of each of the first to third presence databases 51, 52 and 53.

In the first exemplary embodiment, for instance, each of the first to third presence servers 41, 42 and 43 calculates a storage ratio in the associated presence database, that is, each of the first to third presence databases 51, 52 and 53, respectively, at a predetermined time interval (for instance, once a day).

For instance, in order to calculate a storage ratio, the first to third presence servers 41, 42 and 43 may be designed to include a storage-ratio calculator 411, 421, and 431, respectively, as illustrated in FIG. 3.

Herein, a storage ratio SR is defined as follows.

$$SR = Y/X \times 100\ (\%)$$

SR: Storage ratio
X: a maximum number of presence information stored in one presence database
Y: a number of presence information currently stored in the one presence database

For instance, if the first presence database 51 can store five million presence information (X = 5,000,000), and the first presence database 51 presently stores one million presence information (Y = 1,000,000), a storage ratio is 20% (1,000,000/5,000,000 x 100).

When a storage ratio is calculated, each of the first to third presence servers 41, 42 and 43 carries out, in sequence, steps of counting a number Y of presence information currently stored in the associated presence database, that is, each of the first to third presence databases 51, 52 and 53, respectively, and dividing the counted number Y by a maximum number X of presence information.

After calculating a storage ratio, each of the first to third presence servers 41, 42 and 43 transmits the calculated storage ratio to the assignment presence server 20.

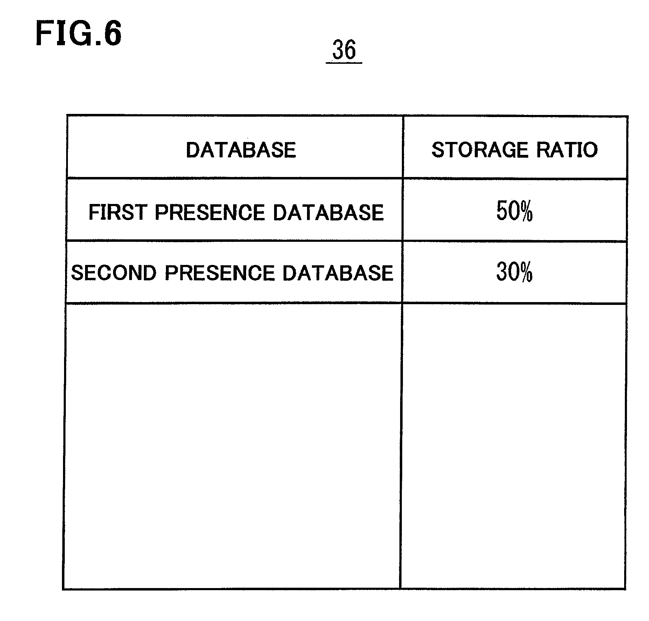

For instance, the assignment database 30 in the first exemplary embodiment stores not only the above-mentioned assignment table 35 illustrated in FIG. 5, but also a storage ratio table 36 as illustrated in FIG. 6.

As illustrated in FIG. 6, the storage ratio table 36 indicates correspondence between each of the first to third presence databases 51, 52 and 53 and a storage ratio of each of the first to third presence databases 51, 52 and 53.

On receipt of the calculated storage ratio from each of the first to third presence servers 41, 42 and 43, the assignment presence server 20 updates a storage ratio stored in the storage table 36 in accordance with the received storage ratio. That is, the assignment presence server 20 carries out a process of updating the storage table 36.

Thus, latest storage ratios are stored in the storage table 36 everyday.

Hereinbelow is explained a rearrangement process to be carried out by the assignment presence server 20 when there is made a difference among storage ratios of the first to third presence databases 51, 52 and 53.

In the first exemplary embodiment, if a difference in a storage ratio among the first to third presence databases 51, 52 and 53 is equal to or greater than a predetermined threshold, a rearrangement process in which presence information is transferred among the first to third presence databases 51, 52 and 53 is carried out by, for instance, the assignment presence server 20 in order to reduce the difference.

The assignment presence server 20 carries out a process of updating the assignment table 35 together with the rearrangement process.

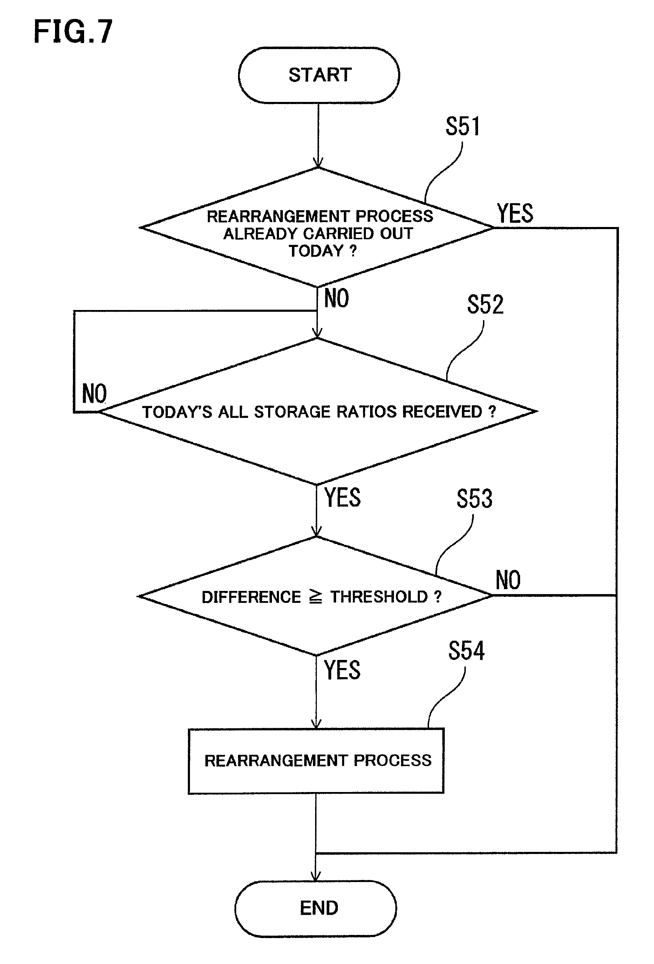

FIG. 7 is a flow-chart showing steps to be carried out by the assignment presence server 20 in a test for determining whether the rearrangement process is carried out.

As illustrated in FIG. 7, the assignment presence server 20 first judges whether a rearrangement process has been already carried out today, in step S51.

If a rearrangement process has been already carried out today (YES in step S51), the assignment presence server 20 finishes the test.

If a rearrangement process is not yet carried out today (NO in step S51), the assignment presence server 20 judges whether the assignment presence server 20 receives today's storage ratios from all of the first to third presence servers 41, 42 and 43, in step S52.

If the assignment presence server 20 does not receive a today's storage ratio from at least one of the first to third presence servers 41, 42 and 43 (NO in step S52), the assignment presence server 20 repeatedly judges whether the assignment presence server 20 receives today's storage ratios from all of the first to third presence servers 41, 42 and 43, until the assignment presence server 20 receives today's storage ratios from all of the first to third presence servers 41, 42 and 43.

If the assignment presence server 20 receives today's storage ratios from all of the first to third presence servers 41, 42 and 43 (YES in step S52), the assignment presence server 20 judges a difference among the today's storage ratios is equal to or greater than a predetermined threshold, in step S53.

If a difference among the today's storage ratios is equal to or greater than the predetermined threshold (YES in step S53), the assignment presence server 20 carries out the rearrangement process in step S54.

In contrast, if a difference among the today's storage ratios is smaller than the predetermined threshold (NO in step S53), the assignment presence server 20 finishes the test without carrying out the rearrangement process.

The assignment presence server 20 can have an arbitrarily determined threshold. For instance, assuming that a threshold is 30%, if a storage ratio of the first presence database 51 is 80%, and a storage ratio of the second presence database 52 is 49%, since a difference (80 - 49 = 31%) is greater than the threshold (30%), the assignment presence server 20 carries out the rearrangement process.

For instance, the rearrangement process is carried out in a unit of the above-mentioned index.

Specifically, for instance, if a storage ratio of the first presence database 51 is 80%, and a storage ratio of the second presence database 52 is 49%, the assignment presence server 20 carries out the rearrangement process such that presence information stored in the first presence database 51 is transferred to the second presence database 52 index by index in order to reduce a difference (31%) between the storage ratios. For instance, presence information of user terminals identified with the column "51111" is all transferred to the second presence database 52 from the first presence database 51.

A step of transferring presence information index by index can be carried out by the assignment presence server 20, for instance, by informing the first presence server 41 of both index to be transferred (for instance, "51111") and a presence database to which presence information should be transferred (for instance, the second presence database 52).

On receipt of the information from the assignment presence server 20, the first presence server 41 takes presence information identified with the informed index (for instance, "51111") out of the first presence database 51 of the first database server 61, and transfers the thus taken-out presence information to the second presence database 52 of the second database server 62 through the second presence server 42.

The assignment presence server 20 carries out a process of updating the assignment table 35 together with the above-mentioned rearrangement process. For instance, presence database associated with the index "51111" is transferred to the second presence database 52 from the first presence database 51.

By carrying out the above-mentioned rearrangement process, it is possible to prevent a difference in a storage ratio among the first to third presence databases 51, 52 and 53 from increasing too much.

Hereinbelow is explained a process of increasing or decreasing a number of database servers.

First, a process of increasing a number of database servers is explained.

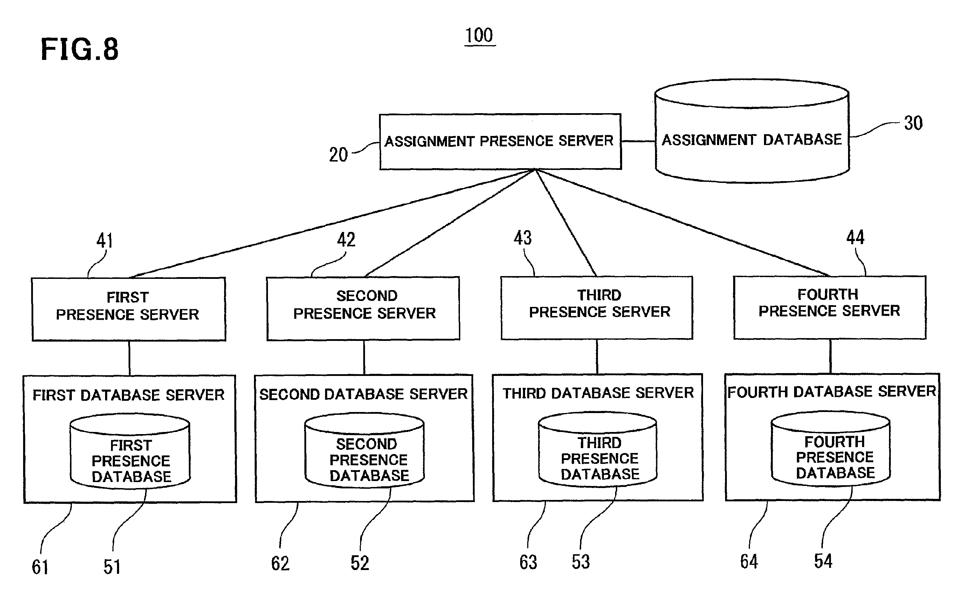

FIG. 8 is a block diagram of the presence service system 100 to which a fourth database server 64 including a fourth presence database 54, and a fourth presence server 44 associated with the fourth database server 64 are added in comparison with the presence service system 100 illustrated in FIG. 3.

The fourth database server 64 are structurally identical with the first to third database servers 61, 62 and 63, and the fourth presence server 44 is structurally identical with the first to third presence servers 41, 42 and 43.

When the fourth presence database server 64 is newly added to the presence service system 100, a space for storing index associated with the fourth presence database 54 is added to the assignment table 35 of the assignment database 30, and a space for storing a storage ratio of the fourth presence database 54 is added to the assignment table 36.

Similarly to the first to third presence servers 41, 42 and 43, the fourth presence server 44 calculates a storage ratio of the fourth presence database 54, for instance, once a day, and transmits the calculated storage ratio to the assignment presence server 20.

It is supposed that a storage ratio of the fourth presence database at a first day is 0%, for instance. If there is a difference in a storage ratio among the first to fourth presence databases 51, 52, 53 and 54, the rearrangement process is carried out as mentioned above. Thus, even if a number of the presence databases is increased, a difference in a storage ratio among the first to fourth presence databases 51, 52, 53 and 54 is reduced as days go by.

Hereinbelow is explained a process of reducing a number of database servers.

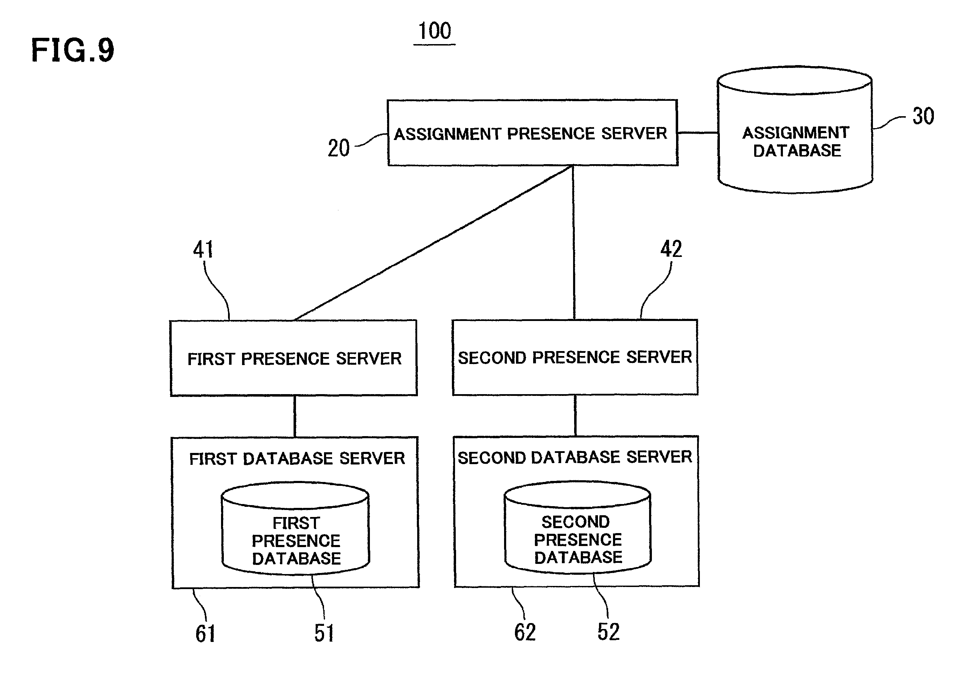

FIG. 9 is a block diagram of the presence service system 100 out of which the third database server 63 and the associated third presence server 43 are removed in comparison with the presence service system 100 illustrated in FIG. 3.

When the third database server 63 is removed as illustrated in FIG. 9, a space for storing index associated with the third presence database 53 is removed out of the assignment table 35 of the assignment database 30, and a space for storing a storage ratio of the third presence database 53 is removed out of the assignment table 36.

When a number of the database servers is increased or reduced, it is not always necessary for the assignment presence server 20 to automatically carry out the rearrangement process. At least a part of the rearrangement process may be manually carried out by an administrator of the presence service system 100, in which case, it is preferable that the rearrangement process is carried out index by index.

In accordance with the above-mentioned first exemplary embodiment, since the assignment presence server 20 which is a part of the presence service system 100 carries out the assignment process, it is no longer necessary for the IMS core network 10 to include a database storing which presence server covers each of users.

Furthermore, the HSS 11 stores only one IFC presence server address. Specifically, the HSS 11 in the first exemplary embodiment stores only an IP address of the assignment presence server 20.

Accordingly, even if the rearrangement process is carried out, impact caused by arrangement of IFC is not exerted on the IMS core network 10.

Thus, it is possible to accomplish presence service in a large scale without exerting impact on the IMS core network 10.

[Second Exemplary Embodiment]

In the above-mentioned first exemplary embodiment, when a difference in a storage ratio among the first to third presence databases 51, 52 and 53 is equal to or greater than a threshold, the rearrangement process is carried out automatically by the assignment presence server 20. The rearrangement process may be carried out manually by an administrator of the presence service system 100.

In the second exemplary embodiment, when a difference in a storage ratio among the first to third presence databases 51, 52 and 53 is equal to or greater than a threshold, an alarm is output to let an administrator of the presence service system 100 know.

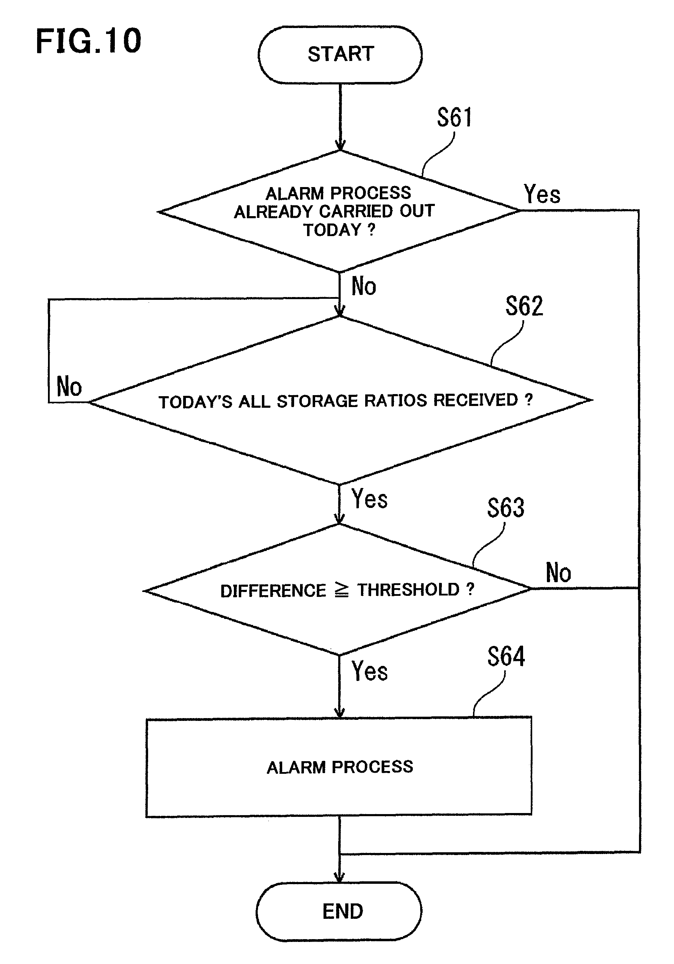

The second exemplary embodiment is different from the first exemplary embodiment only in that the assignment presence server 20 carries out a process illustrated in FIG. 10 in place of the process illustrated in FIG. 7.

FIG. 10 is a flow-chart showing steps to be carried out by the assignment presence server 20 in a test for determining whether an alarm process as an annunciation process is to be carried out.

As illustrated in FIG. 10, the assignment presence server 20 first judges whether an alarm process has been already carried out today, in step S61.

If an alarm process has been already carried out today (YES in step S61), the assignment presence server 20 finishes the test.

If an alarming process is not yet carried out today (NO in step S61), the assignment presence server 20 judges whether the assignment presence server 20 receives today's storage ratios from all of the first to third presence servers 41, 42 and 43, in step S62.

If the assignment presence server 20 does not receive a today's storage ratio from at least one of the first to third presence servers 41, 42 and 43 (NO in step S62), the assignment presence server 20 repeatedly judges whether the assignment presence server 20 receives today's storage ratios from all of the first to third presence servers 41, 42 and 43, until the assignment presence server 20 receives today's storage ratios from all of the first to third presence servers 41, 42 and 43.

If the assignment presence server 20 receives today's storage ratios from all of the first to third presence servers 41, 42 and 43 (YES in step S62), the assignment presence server 20 judges a difference among the today's storage ratios is equal to or greater than a predetermined threshold, in step S63.

If a difference among the today's storage ratios is equal to or greater than the predetermined threshold (YES in step S63), the assignment presence server 20 carries out the alarm process in step S64.

In contrast, if a difference among the today's storage ratios is smaller than the predetermined threshold (NO in step S63), the assignment presence server 20 finishes the test without carrying out the alarm process.

The alarm process may be comprised of outputting annunciation sound out of a speaker (not illustrated), displaying an alarm in a display device (not illustrated), or emitting a light out of a light-emitting device (not illustrated).

By carrying out the alarm process, an administrator of the presence service system 100 can know necessity of carrying out the rearrangement process. The rearrangement process carried out manually by an administrator of the presence service system 100 is carried out index by index similarly to the above-mentioned first exemplary embodiment.

Similarly to the above-mentioned first exemplary embodiment, a threshold may be arbitrarily determined.

In accordance with the above-mentioned second exemplary embodiment, when a difference in a storage ratio among the first to third presence databases 51, 52 and 53 is equal to or greater than a threshold, there is carried out the alarm process, which let an administrator of the presence service system 100 know necessity of carrying out the rearrangement process.

[Third Exemplary Embodiment]

The presence service system 100 in the above-mentioned first and second exemplary embodiments is designed to include a single assignment presence server 20. In contrast, the presence service system 100 in the third exemplary embodiment is designed to include a plurality of assignment presence servers, and a load balancer disposed upstream of the assignment presence servers.

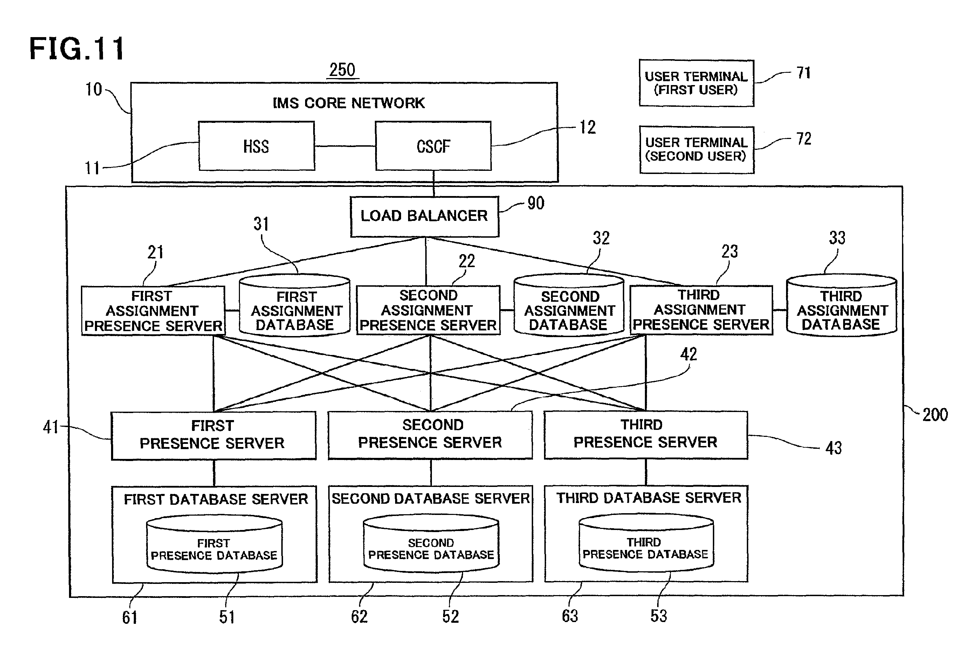

FIG. 11 is a block diagram of a network system 250 in accordance with the third exemplary embodiment.

The network system 250 in accordance with the third exemplary embodiment is designed to include a presence service system 200.

As illustrated in FIG. 11, the network system 250 in accordance with the third exemplary embodiment is structurally different from the network system 150 in accordance with the first and second exemplary embodiments only in including the presence service system 200 in place of the presence service system 100. Accordingly, parts or elements that correspond to those of the network system 150 illustrated in FIG. 3 have been provided with the same reference numerals, and operate in the same manner as corresponding parts or elements in the first and second exemplary embodiments, unless explicitly explained hereinbelow.

As illustrated in FIG. 11, the presence service system 200 in the third exemplary embodiment is structurally different from the presence service system 100 in the first and second exemplary embodiments in including first to third assignment presence servers 21, 22 and 23, first to third assignment databases 31, 32 and 33, and a load balancer 90 dispersing a load to the first to third assignment presence servers 21, 22 and 23 in place of the assignment presence server 20 and the assignment database 30.

The presence service system 200 in the third exemplary embodiment may include any number of assignment presence servers, unless the number is equal to or greater than two. The presence service system 200 illustrated in FIG. 11 is exemplified as including three assignment presence servers. Similarly, the presence service system 200 in the third exemplary embodiment may include any number of assignment databases, unless the number is equal to or greater than two. The presence service system 200 illustrated in FIG. 11 is exemplified as including two assignment presence servers in conformity with a number of the assignment presence servers.

In the third exemplary embodiment, an IFC presence server address stored in the HSS 11 is only an IP address of the load balancer 90. The CSCF 12 of the IMS core network 10 receives an information-updating request signal from the user terminals 71 and 72, and transfers the received information-updating request signal to the load balancer 90 through Internet or other networks.

On receipt of the information-updating request signal from the CSCF 12, the load balancer 90 selects one of the first to third assignment presence servers 21, 22 and 23, and transfers the received information-updating request signal to the selected assignment presence server in order to uniformize a load in the first to third assignment presence servers 21, 22 and 23.

For instance, the load balancer 90 may transfer received information-updating request signals to the first to third assignment presence servers 21, 22 and 23 in order. Specifically, the load balancer 90 transfers a firstly received information-updating request signal to the first assignment presence server 21, a secondly received information-updating request signal to the second assignment presence server 22, a thirdly received information-updating request signal to the third assignment presence server 23, a fourthly received information-updating request signal to the first assignment presence server 21, and so on.

One assignment presence server among the first to third assignment presence servers 21, 22 and 23 (for instance, the first assignment presence server 21) is selected in advance as a representative assignment presence server, which is works in the same way as the assignment presence server 20 in the above-mentioned first and second exemplary embodiments.

Assignment presence servers other than the representative assignment presence server (for instance, the second and third assignment presence servers 22 and 23) are different from the assignment presence server 20 in the above-mentioned first and second exemplary embodiments in that they do not carry out the above-mentioned rearrangement or alarm process, a process for updating the storage ratio table 36, and a process for updating the assignment table 35, but is identical with the assignment presence server 20 in other matters such as carrying out the assignment process.

Each of the first to third assignment databases 31, 32 and 33 is structurally identical with the assignment database 30 in the above-mentioned first and second exemplary embodiments.

In the third exemplary embodiment, the first assignment presence server 21 retrieves the first assignment database 31 in the assignment process, the second assignment presence server 22 retrieves the second assignment database 32 in the assignment process, and the third assignment presence server 23 retrieves the third assignment database 33 in the assignment process.

In the third exemplary embodiment, each of the first to third presence servers 41, 42 and 43 transmits a signal indicative of the calculated storage ratio to the first assignment presence server 21, for instance, and the first assignment presence server 21 reflects the received storage ratio on the storage ratio table 36 included in the first assignment database 31, in other words, the first assignment presence server 21 updates the storage ratio table 36 included in the first assignment database 31 in accordance with the received storage ratio.

Furthermore, the first assignment presence server 21 reflects the received storage ratio further on the storage ratio tables 36 included in the assignment databases (for instance, the second and third assignment databases 32 and 33) associated with the other assignment presence servers. Thus, the storage ratio tables 36 and the assignment tables 35 included in the first to third assignment databases 31, 32 and 33 are kept identical with one another.

If the rearrangement process is automatically carried out in the third exemplary embodiment similarly to the above-mentioned first exemplary embodiment, an assignment presence server selected in advance among the first to third assignment presence servers 21, 22 and 23 (for instance, the first assignment presence server) carries out the rearrangement process.

For instance, the first assignment presence server 21 not only carries out the rearrangement process, but also updates the assignment tables 35 of the first to third assignment databases 31, 32 and 33. As a result, the assignment tables 35 of the first to third assignment databases 31, 32 and 33 are kept to store the same data as one another.

It is preferable that an administrator of the presence service system 200 arbitrarily selects one of the first to third assignment presence servers 21, 22 and 23 as a representative assignment presence server.

In accordance with the above-mentioned third exemplary embodiment, it is possible to uniformize a load among the first to third assignment presence servers 21, 22 and 23 by means of the load balancer 90.

Furthermore, since the assignment tables 35 of the first to third assignment databases 31, 32 and 33 are kept to store the same data as one another, each of the first to third assignment presence servers 21, 22 and 23 can always preferably carry out the assignment process.

In the above-mentioned third exemplary embodiment, the first to third assignment presence servers 21, 22 and 23 are associated with the first to third assignment databases 31, 32 and 33, respectively. As an alternative, the first to third assignment presence servers 21, 22 and 23 may be designed to commonly include one assignment database (for instance, the first assignment database 31).

In the above-mentioned first to third exemplary embodiments, the IMS core network 10 is exemplified as a core network. IMS is a standard in 3GPP, and it is called MMD (MultiMedia Domain) in 3GPP2. Accordingly, a MMD core network is used in 3GPP2 in place of the IMS core network 10.

Furthermore, a core network may be comprised of an SIP server.

In the above-mentioned first exemplary embodiment, the assignment database 30 is separate from the assignment presence server 20. As an alternative, the assignment database 30 may be included in the assignment presence server 20. Similarly, the first to third assignment databases 31, 32 and 33 are separate from the first to third presence servers 21, 22 and 23, respectively, in the above-mentioned third exemplary embodiment, but the first to third assignment databases 31, 32 and 33 may be designed to be included in the first to third presence servers 21, 22 and 23, respectively.

In the above-mentioned first exemplary embodiment, when the rearrangement process is automatically carried out, the assignment presence server 20 is designed to carry out the rearrangement process. As an alternative, the presence service system 100 may be designed to include a server (not illustrated) which carries out the rearrangement process in which the steps illustrated in FIG. 7 are carried out.

In the above-mentioned second exemplary embodiment, the assignment presence server 20 is designed to carry out the alarm process as an annunciation process. As an alternative, the presence service system 100 may be designed to include a server (not illustrated) which carries out the alarm process as an annunciation process.

In the above-mentioned first to third exemplary embodiments, each of the first to third presence servers 41, 42 and 43 calculates a storage ratio, and transmits the calculated storage ratio to the assignment presence server 20. As an alternative, the presence service system 100 may be designed to include a server (not illustrated) which calculates a storage ratio, and transmits the calculated storage ratio to the assignment presence server 20 in place of the first to third presence servers 41, 42 and 43.

Apart from the above-mentioned exemplary embodiments, the network system in accordance with the present invention has preferred exemplary embodiments as follows.

In a preferred exemplary embodiment, the presence service system in accordance with the present invention further includes an assignment database storing correspondence between each of users and each of the presence servers covering the each of users, the assignment presence server carrying out the assignment process by retrieving the assignment database, to select one of the presence servers which covers a user designated in the request.

In a preferred exemplary embodiment, assuming that users having one of a telephone number and SIP-URI (Session Initiation Protocol-Uniform Resource Identifier) both including common figures in a predetermined number of columns belong to a common group, the assignment database stores therein correspondence between each of groups and each of the presence servers associated with the each of groups.

In a preferred exemplary embodiment, assuming that X indicates a maximum number of presence information stored in one presence database, Y indicates a number of presence information currently stored in the one presence database, and Y/X indicates a storage ratio in the one presence database, when a difference in the storage ratio among the presence databases is equal to or greater than a predetermined threshold, the assignment presence server carries out a rearrangement process in which presence information is transferred among the presence databases to reduce the difference.

In a preferred exemplary embodiment, the presence service system in accordance with the present invention further includes a storage-ratio database storing the storage ratio in each of the presence databases, the assignment presence server retrieves the storage-ratio database to judge whether the difference is equal to or greater than the predetermined threshold, and, if the difference is judged to be equal to or greater than the predetermined threshold, carries out the rearrangement process.

In a preferred exemplary embodiment, assuming that users having one of a telephone number and SIP-URI (Session Initiation Protocol-Uniform Resource Identifier) both including common figures in a predetermined number of columns belong to a common group, presence information is rearranged in a unit of the group in the rearrangement process.

In a preferred exemplary embodiment, assuming that X indicates a maximum number of presence information stored in one presence database, Y indicates a number of presence information currently stored in the one presence database, and Y/X indicates a storage ratio in the one presence database, when a difference in the storage ratio among the presence databases is equal to or greater than a predetermined threshold, the assignment presence server carries out an annunciation process for annunciating that the difference is equal to or greater than the predetermined threshold.

In a preferred exemplary embodiment, the presence service system in accordance with the present invention further includes a storage-ratio database storing the storage ratio in each of the presence databases, the assignment presence server retrieves the storage-ratio database to judge whether the difference is equal to or greater than the predetermined threshold, and, if the difference is judged to be equal to or greater than the predetermined threshold, carries out the annunciation process.

In a preferred exemplary embodiment, the presence service system in accordance with the present invention further includes a storage-ratio calculator for calculating the storage ratio in each of the presence databases at a predetermined time interval, and wherein result of calculation carried out by the storage-ratio calculator is reflected on the storage-ratio database.

In a preferred exemplary embodiment, each of the presence servers calculates the storage ratio of an associated presence database at a predetermined time interval, and result of calculation carried out by each of the presence servers is reflected on the storage-ratio database.

In a preferred exemplary embodiment, assuming that users having one of a telephone number and SIP-URI (Session Initiation Protocol-Uniform Resource Identifier) both including common figures in a predetermined number of columns belong to a common group, each of the presence databases stores presence information in a unit of the group.

In a preferred exemplary embodiment, the presence service system in accordance with the present invention includes at least two the assignment presence servers, and a load balancer which, when the request is transmitted to the presence service system from a user terminal, transfers the request to a selected one of the assignment presence servers.

In a preferred exemplary embodiment of the assignment presence server in accordance with the present invention, the assignment presence server carries out the assignment process by retrieving an assignment database storing correspondence between each of users and each of the presence servers covering the each of users, to select one of the presence servers which covers a user designated in the request.

In a preferred exemplary embodiment of the assignment presence server in accordance with the present invention, assuming that X indicates a maximum number of presence information stored in one presence database, Y indicates a number of presence information currently stored in the one presence database, and Y/X indicates a storage ratio in the one presence database, when a difference in the storage ratio among the presence databases is equal to or greater than a predetermined threshold, the assignment presence server carries out a rearrangement process in which presence information is transferred among the presence databases to reduce the difference.

In a preferred exemplary embodiment of the assignment presence server in accordance with the present invention, the assignment presence server retrieves a storage-ratio database storing the storage ratio in each of the presence databases, to judge whether the difference is equal to or greater than the predetermined threshold, and, if the difference is judged to be equal to or greater than the predetermined threshold, carries out the rearrangement process.

In a preferred exemplary embodiment of the assignment presence server in accordance with the present invention, assuming that X indicates a maximum number of presence information stored in one presence database, Y indicates a number of presence information currently stored in the one presence database, and Y/X indicates a storage ratio in the one presence database, when a difference in the storage ratio among the presence databases is equal to or greater than a predetermined threshold, the assignment presence server carries out an annunciation process for annunciating that the difference is equal to or greater than the predetermined threshold.

In a preferred exemplary embodiment of the assignment presence server in accordance with the present invention, the assignment presence server retrieves a storage-ratio database storing the storage ratio in each of the presence databases, to judge whether the difference is equal to or greater than the predetermined threshold, and, if the difference is judged to be equal to or greater than the predetermined threshold, carries out the annunciation process.

In a preferred exemplary embodiment of the method of assigning a request relating to presence service transmitted from a user terminal to a presence service system comprising at least two presence servers, and at least two presence databases storing therein presence information of users, each of said presence databases being associated with any one of said presence servers, in accordance with the present invention, the method may further include, assuming that X indicates a maximum number of presence information stored in one presence database, Y indicates a number of presence information currently stored in the one presence database, and Y/X indicates a storage ratio in the one presence database, judging whether a difference in the storage ratio among the presence databases is equal to or greater than a predetermined threshold, and if the difference is judged to be equal to or greater than the predetermined threshold, carrying out a rearrangement process in which presence information is transferred among the presence databases to reduce the difference.

In a preferred exemplary embodiment of the method in accordance with the present invention, the method may further include, assuming that X indicates a maximum number of presence information stored in one presence database, Y indicates a number of presence information currently stored in the one presence database, and Y/X indicates a storage ratio in the one presence database, judging whether a difference in the storage ratio among the presence databases is equal to or greater than a predetermined threshold, and if the difference is judged to be equal to or greater than the predetermined threshold, carrying out an annunciation process for annunciating that the difference is equal to or greater than the predetermined threshold.

The exemplary advantages obtained by the above-mentioned exemplary embodiments are described hereinbelow.

In accordance with the above-mentioned exemplary embodiments, the presence service system carries out the assignment process in which a request relating to presence service is transferred to one of the presence servers which covers a user designated in the request. Accordingly, it is no longer necessary for the core network to include a database indicating which presence server covers each of users.

Furthermore, a number of presence server addresses to be stored in the core network is just one.

Thus, even if a number of presence servers is increased or decreased as a number of database servers each including a presence database is increased or decreased, it is not necessary for the core network to change IFC conditions.

Consequently, when presence service is to be expanded or contracted, it is possible to minimize impact to be exerted on the core network.

While the present invention has been described in connection with certain exemplary embodiments, it is to be understood that the subject matter encompassed by way of the present invention is not to be limited to those specific embodiments. On the contrary, it is intended for the subject matter of the invention to include all alternatives, modifications and equivalents as can be included within the spirit and scope of the following claims.

This application is based upon and claims the benefit of priority from Japanese Patent Application No. 2007-073226 filed on March 20, 2007, the entire disclosure of which, including specification, claims, drawings and summary, is incorporated herein by reference in its entirety.

**Claims**

1. A presence service system (100) comprising:

   at least two presence servers (41, 42, 43, 44); and
   at least two presence databases (51, 52, 53, 54) storing therein presence information of users, each of the presence databases (51, 52, 53, 54) being associated with any one of the presence servers (41, 42, 43, 44),

   **characterized by**
   an assignment presence server (20) which, when a request relating to presence service is transmitted to the presence service system from a user terminal (71, 72), carries out an assignment process in which the request is transmitted to one of the presence servers (41, 42, 43, 44) covering a user designated in the request.

2. The presence service system as set forth in claim 1, further comprising an assignment database (30) storing correspondence between each of users and each of the presence servers (41, 42, 43, 44) covering the each of users,
the assignment presence server (20) carrying out the assignment process by retrieving the assignment database (30), to select one of the presence servers (41, 42, 43, 44) which covers a user designated in the request.

3. The presence service system as set forth in claim 2, wherein, assuming that users having one of a telephone number and SIP-URI (Session Initiation Protocol-Uniform Resource Identifier) both including common figures in a predetermined number of columns (82) belong to a common group, the assignment database (30) stores therein correspondence between each of groups and each of the presence servers (41, 42, 43, 44) associated with the each of groups.

4. The presence service system as set forth in one of claims 1 to 3, wherein, assuming that X indicates a maximum number of presence information stored in one presence database, Y indicates a number of presence information currently stored in the one presence database, and Y/X indicates a storage ratio in the one presence database, when a difference in the storage ratio among the presence databases (51, 52, 53, 54) is equal to or greater than a predetermined threshold, the assignment presence server (20) carries out a rearrangement process in which presence information is transferred among the presence databases (51, 52, 53, 54) to reduce the difference.

5. The presence service system as set forth in claim 4, further including a storage-ratio database (36) storing the storage ratio in each of the presence databases (51, 52, 53, 54),
the assignment presence server (20) retrieves the storage-ratio database (36) to judge whether the difference is equal to or greater than the predetermined threshold, and, if the difference is judged to be equal to or greater than the predetermined threshold, carries out the rearrangement process.

6. The presence service system as set forth in claim 4 or 5, wherein, assuming that users having one of a telephone number and SIP-URI (Session Initiation Protocol-Uniform Resource Identifier) both including common figures in a predetermined number of columns belong to a common group, presence information is rearranged in a unit of the group in the rearrangement process.

7. The presence service system as set forth in one of claims 1 to 6, wherein, assuming that X indicates a maximum number of presence information stored in one presence database, Y indicates a number of presence information currently stored in the one presence database, and Y/X indicates a storage ratio in the one presence database, when a difference in the storage ratio among the presence databases (51, 52, 53, 54) is equal to or greater than a predetermined threshold, the assignment presence server (20) carries out an annunciation process for annunciating that the difference is equal to or greater than the predetermined threshold.

8. The presence service system as set forth in claim 7, further including a storage-ratio database (36) storing the storage ratio in each of the presence databases (51, 52, 53, 54),
the assignment presence server (20) retrieves the storage-ratio database (36) to judge whether the difference is equal to or greater than the predetermined threshold, and, if the difference is judged to be equal to or greater than the predetermined threshold, carries out the annunciation process.

9. The presence service system as set forth in claim 5 or 8, further comprising a storage-ratio calculator (411, 421, 431) for calculating the storage ratio in each of the presence databases (51, 52, 53, 54) at a predetermined time interval, and wherein result of calculation carried out by the storage-ratio calculator (411, 421, 431) is reflected on the storage-ratio database (36).

10. The presence service system as set forth in claim 5 or 8, wherein each of the presence servers (41, 42, 43, 44) calculates the storage ratio of an associated presence database at a predetermined time interval, and result of calculation carried out by each of the presence servers (41, 42, 43, 44) is reflected on the storage-ratio database (36).

11. The presence service system as set forth in any one of claims 1 to 5, 7 and 8, wherein, assuming that users having one of a telephone number and SIP-URI (Session Initiation Protocol-Uniform Resource Identifier) both including common figures in a predetermined number of columns belong to a common group, each of the presence databases (51, 52, 53, 54) stores presence information in a unit of the group.

12. The presence service system as set forth in any one of claims 1 to 5, 7 and 8, comprising at least two assignment presence servers (21, 22, 23), and a load balancer (90) which, when the request is transmitted to the presence service system from a user terminal (71, 72), transfers the request to a selected one of the assignment presence servers (21, 22, 23).

13. A network system (150, 250) comprising:

    a core network (10); and
    a presence service system (100, 200) set forth in any one of claims 1 to 12,

    wherein the core network (10), on receipt of the request from a user terminal (71, 72), transfers the request to the presence service system (100, 200) without confirming which presence server covers a user designated in the request.

14. An assignment presence server (20, 21, 22, 23) used in a presence service system (100, 200) comprising at least two presence servers (41, 42, 43, 44), at least two presence databases (51, 52, 53, 54) storing therein presence information of users, each of the presence databases (51, 52, 53, 54) being associated with any one of the presence servers (41, 42, 43, 44),
    wherein when a request relating to presence service is transmitted to the presence service system (100, 200) from a user terminal (71, 72), the assignment presence server (20, 21, 22, 23) carries out an assignment process in which the request is transmitted to one of the presence servers (41, 42, 43, 44) covering a user designated in the request.

15. The assignment presence server (20, 21, 22, 23) as set forth in claim 14, wherein the assignment presence server (20, 21, 22, 23) carries out the assignment process by retrieving an assignment database (30, 31, 32, 33) storing correspondence between each of users and each of the presence servers (41, 42, 43, 44) covering the each of users, to select one of the presence servers (41, 42, 43, 44) which covers a user designated in the request.

16. The assignment presence server (20, 21, 22, 23) as set forth in claim 14 or 15, wherein, assuming that X indicates a maximum number of presence information stored in one presence database, Y indicates a number of presence information currently stored in the one presence database, and Y/X indicates a storage ratio in the one presence database, when a difference in the storage ratio among the presence databases (51, 52, 53, 54) is equal to or greater than a predetermined threshold, the assignment presence server (20, 21, 22, 23) carries out a rearrangement process in which presence information is transferred among the presence databases (51, 52, 53, 54) to reduce the difference.

17. The assignment presence server (20, 21, 22, 23) as set forth in claim 16, the assignment presence server (20, 21, 22, 23) retrieves a storage-ratio database (36) storing the storage ratio in each of the presence databases (51, 52, 53, 54), to judge whether the difference is equal to or greater than the predetermined threshold, and, if the difference is judged to be equal to or greater than the predetermined threshold, carries out the rearrangement process.

18. The assignment presence server (20, 21, 22, 23) as set forth in claim 14 or 15, wherein, assuming that X indicates a maximum number of presence information stored in one presence database, Y indicates a number of presence information currently stored in the one presence database, and Y/X indicates a storage ratio in the one presence database, when a difference in the storage ratio among the presence databases (51, 52, 53, 54) is equal to or greater than a predetermined threshold, the assignment presence server (20, 21, 22, 23) carries out an annunciation process for annunciating that the difference is equal to or greater than the predetermined threshold.

19. The assignment presence server (20, 21, 22, 23) as set forth in claim 18, wherein the assignment presence server (20, 21, 22, 23) retrieves a storage-ratio database (36) storing the storage ratio in each of the presence databases (51, 52, 53, 54), to judge whether the difference is equal to or greater than the predetermined threshold, and, if the difference is judged to be equal to or greater than the predetermined threshold, carries out the annunciation process.

20. A method of assigning a request relating to presence service transmitted from a user terminal (71, 72) to a presence service system (100, 200) comprising at least two presence servers (41, 42, 43, 44), and at least two presence databases (51, 52, 53, 54) storing therein presence information of users, each of the presence databases (51, 52, 53, 54) being associated with any one of the presence servers (41, 42, 43, 44),
    the method comprising:

    detecting which presence server covers a user designated in the request; and
    transferring the request to the detected presence server.

21. The method as set forth in claim 20, further comprising:

    assuming that X indicates a maximum number of presence information stored in one presence database, Y indicates a number of presence information currently stored in the one presence database, and Y/X indicates a storage ratio in the one presence database,

judging whether a difference in the storage ratio among the presence databases (51, 52, 53, 54) is equal to or greater than a predetermined threshold; and

if the difference is judged to be equal to or greater than the predetermined threshold, carrying out a rearrangement process in which presence information is transferred among the presence databases (51, 52, 53, 54) to reduce the difference.

22. The method as set forth in claim 20, further comprising:

assuming that X indicates a maximum number of presence information stored in one presence database, Y indicates a number of presence information currently stored in the one presence database, and Y/X indicates a storage ratio in the one presence database,

judging whether a difference in the storage ratio among the presence databases (51, 52, 53, 54) is equal to or greater than a predetermined threshold; and

if the difference is judged to be equal to or greater than the predetermined threshold, carrying out an annunciation process for annunciating that the difference is equal to or greater than the predetermined threshold.

23. A computer program adapted to perform the steps of the method set forth in claim 20, 21 or 22, when the program is run on a computer.

# FIG.1
RELATED ART

**IMS CORE NETWORK** — 1010, 1500

HSS — 1011

CSCF — 1012

USER TERMINAL (FIRST USER) — 1071

USER TERMINAL (SECOND USER) — 1072

FIRST PRESENCE SERVER — 1041

SECOND PRESENCE SERVER — 1042

THIRD PRESENCE SERVER — 1043

FIRST DATABASE SERVER — 1061

FIRST PRESENCE DATABASE — 1051

SECOND DATABASE SERVER — 1062

SECOND PRESENCE DATABASE — 1052

THIRD DATABASE SERVER — 1063

THIRD PRESENCE DATABASE — 1053

1000

EP 1 973 301 A2

EP 1 973 301 A2

# FIG.2
RELATED ART

1071 — USER TERMINAL (FIRST USER)
1072 — USER TERMINAL (SECOND USER)
1012 — CSCF
1010 — IMS CORE NETWORK
1011 — HSS
1041 — FIRST PRESENCE SERVER
1042 — SECOND PRESENCE SERVER

INFORMATION-UPDATING REQUEST SIGNAL
S1001
S1002
INQUIRY
REPLY (FIRST PRESENCE SERVER)
S1003
TRANSFERRING THE SIGNAL
S1004
INSTRUCTION SIGNAL
S1005
1061 — FIRST DATABASE SERVER
UPDATING
S1009 TRANSFERRING RESPONSE DATA
RESPONSE DATA
TRANSMITTING RESULT
S1008
S1007
S1006
FIRST PRESENCE DATABASE
1051

INFORMATION-UPDATING REQUEST SIGNAL
S1011
S1012
INQUIRY
REPLY (SECOND PRESENCE SERVER)
S1013
S1014 TRANSFERRING THE SIGNAL
S1015 INSTRUCTION SIGNAL
1062 — SECOND DATABASE SERVER
UPDATING
S1018 TRANSMITTING RESULT
TRANSFERRING RESPONSE DATA
RESPONSE DATA
S1017
S1016
SECOND PRESENCE DATABASE
1052
S1019

# FIG.3

# FIG.4

EP 1 973 301 A2

# FIG.5

S12

S14

30

ASSIGNMENT
DATABASE

20

ASSIGNMENT
PRESENCE SERVER

FIRST
PRESENCE SERVER — 41

| INDEX | PRESENCE SERVER |
|-------|-----------------|
| 51111 | FIRST PRESENCE SERVER |
| 62222 | SECOND PRESENCE SERVER |
| ... | ... |

ASSIGNMENT TABLE

SECOND
PRESENCE SERVER — 42

THIRD
PRESENCE SERVER — 43

PUBLISH
SIP/2.0
From:
sip:09036551111@xx.abc.com

82

81

35

EP 1 973 301 A2

# FIG.6

<u>36</u>

| DATABASE | STORAGE RATIO |
|---|---|
| FIRST PRESENCE DATABASE | 50% |
| SECOND PRESENCE DATABASE | 30% |
|  |  |

# FIG.7

```
                    ┌──────────┐
                    │  START   │
                    └──────────┘
                         │
                         │                    S51
                         ▼
              ◇─────────────────────◇
             /  REARRANGEMENT PROCESS  \      YES
            <   ALREADY CARRIED OUT      >─────────┐
             \      TODAY ?             /          │
              ◇─────────────────────◇             │
                         │ NO                       │
                         │              S52         │
            ┌────────────▼────────────┐            │
            │           ◇─────────────────────◇    │
         NO │          /                       \   │
        ┌───◇<   TODAY'S ALL STORAGE RATIOS RECEIVED ? >
        │    \                       /             │
        │     ◇─────────────────────◇              │
        │                │ YES                      │
        │                │          S53             │
        │                ▼                          │
        │     ◇─────────────────────◇     NO        │
        │    /                       \    ─────────│
        └───<   DIFFERENCE ≧ THRESHOLD ? >          │
             \                       /              │
              ◇─────────────────────◇              │
                         │ YES                       │
                         │           S54             │
                         ▼                           │
            ┌────────────────────────┐              │
            │  REARRANGEMENT PROCESS  │             │
            └────────────────────────┘             │
                         │                           │
                         ▼◄──────────────────────────┘
                    ┌──────────┐
                    │   END    │
                    └──────────┘
```

24

# FIG.8

**100**

ASSIGNMENT PRESENCE SERVER — 20

ASSIGNMENT DATABASE — 30

41 — FIRST PRESENCE SERVER

42 — SECOND PRESENCE SERVER

43 — THIRD PRESENCE SERVER

44 — FOURTH PRESENCE SERVER

FIRST DATABASE SERVER — FIRST PRESENCE DATABASE — 61 51

SECOND DATABASE SERVER — SECOND PRESENCE DATABASE — 62 52

THIRD DATABASE SERVER — THIRD PRESENCE DATABASE — 63 53

FOURTH DATABASE SERVER — FOURTH PRESENCE DATABASE — 64 54

EP 1 973 301 A2

# FIG.9

## FIG.10

```
                    ┌─────────────┐
                    │    START    │
                    └──────┬──────┘
                           │                    S61
                           ▼
                      ╱─────────╲
                    ╱  ALARM PROCESS ╲          Yes
                   ⟨ ALREADY CARRIED OUT⟩ ────────────┐
                    ╲    TODAY ?    ╱                  │
                      ╲─────────╱                      │
                           │ No                        │
                           ▼                    S62    │
                      ╱─────────╲                      │
       No           ╱             ╲                    │
   ┌──────────────⟨ TODAY'S ALL STORAGE RATIOS RECEIVED ?⟩ │
   │                ╲             ╱                    │
   │                  ╲─────────╱                      │
   │                       │ Yes        S63            │
   │                       ▼                           │
   │                  ╱─────────╲                      │
   │                ╱             ╲        No           │
   │               ⟨ DIFFERENCE ≧ THRESHOLD ?⟩ ────────┤
   │                ╲             ╱                    │
   │                  ╲─────────╱                      │
   │                       │ Yes        S64            │
   │                       ▼                           │
   │              ┌─────────────────┐                 │
   │              │                 │                 │
   │              │  ALARM PROCESS  │                 │
   │              │                 │                 │
   │              └────────┬────────┘                 │
   │                       │                           │
   │                       ▼                           │
   │                 ┌─────────────┐                   │
   └────────────────│     END     │◄──────────────────┘
                    └─────────────┘
```

# FIG.11

USER TERMINAL (FIRST USER) — 71

USER TERMINAL (SECOND USER) — 72

250

10 — IMS CORE NETWORK

11 — HSS — CSCF — 12

90 — LOAD BALANCER

31 — FIRST ASSIGNMENT PRESENCE SERVER — 21

FIRST ASSIGNMENT DATABASE

SECOND ASSIGNMENT PRESENCE SERVER — 22

SECOND ASSIGNMENT DATABASE — 32

THIRD ASSIGNMENT PRESENCE SERVER — 23

THIRD ASSIGNMENT DATABASE — 33

41 — FIRST PRESENCE SERVER

42 — SECOND PRESENCE SERVER

THIRD PRESENCE SERVER — 43

200

FIRST DATABASE SERVER

FIRST PRESENCE DATABASE

SECOND DATABASE SERVER

SECOND PRESENCE DATABASE

THIRD DATABASE SERVER

THIRD PRESENCE DATABASE

61    51    62    52    63    53

EP 1 973 301 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005318503 A
- JP 2007073226 A